# EUROPEAN PATENT APPLICATION

(11) **EP 4 632 364 A1**
(43) Date of publication of application: **15.10.2025**
(21) Application number: 24204754.6
(22) Date of filing: 04.10.2024
(51) Int. Cl.: G01N 23/223, G06Q 30/018, G07D 7/1205

(54) **METHOD FOR THE GENERATION OF A DIGITAL IDENTITY**

(30) Priority: 10.04.2024 IT 202400007975
(71) Applicant: OTID S.r.l., 20122 Milano (IT)
(72) Inventor: Bellucci, Lorenzo, 50019 Via Luca Della Robbia, 20 - Sesto Fiorentino (FI) (IT); Pacciana, Michele, 23 Grosvenor Terrace - London, SE5 0NP (GB)
(74) Representative: Grassi, Stefano

(57) **Abstract**

A method for generating a digital identity of a good is carried out by performing a measurement by X-ray fluorescence spectroscopy, XRF, on a plurality of adjacent areas of at least a portion of the good. Thereby, respective fluorescence spectra are generated which are representative of and identify an elemental composition of the areas. At least one chemical element is selected and a monochromatic image of the portion is generated, wherein each area has a chromatic saturation proportional to the concentration of said chemical element within said area. The digital identity is generated by uniquely associating the image with the good.

## Description

The present invention relates to the technical sector of processes and methods for identifying and authenticating goods.

In particular, the present invention relates to a method for generating a digital identity associated with a good.

Advantageously, the proposed method allows to identify and recognise a good, in particular a cultural property such as a painting, in a safe and certain manner.

In today's age, the need to associate objects, as well as people, with a set of data which uniquely identifies them is a growing priority for a variety of reasons: legal, management, cataloguing and anti-counterfeiting, to name but a few.

Most known objects and goods, from luxury goods to real estate, are commonly equipped with identification codes which facilitate this process; despite the general wide availability of coding techniques, the Cultural Heritage sector instead presents a different picture, as there are still no universally adopted coding conventions and methodologies capable of unambiguously identifying cultural propertys; the research and technological development in this sector are therefore behind relative to the state of the art of most other sectors.

There is therefore a strong need for all professionals in the Cultural Heritage sector for an effective digital-physical cultural heritage association to simplify various processes and solve various problems, such as cultural heritage management, legal disputes, logistics, museum cataloguing and many others.

However, such problems can also be encountered in adjacent sectors in which it is useful, if not necessary, to be able to unambiguously identify a good and certify the authenticity thereof.

Currently, the predominant solutions in the sector have mainly focused on the direct application of physical devices on the goods themselves, but not only.

One example is the use of labels which can be applied directly onto works of art. Although it is possible to make small labels, they are still invasive in consideration of the integrity of the work of art, and easily removable. Another possible solution implements what is known as "augmented authentication" technology. This method aims to solve sector challenges by allowing users to scan the work of art by means of a simple smartphone. However, the level of security and certainty provided by this method is rather low, as there is a risk that, based on surface characteristics of the work, these can change or be modified over time or otherwise be easily counterfeited.

Therefore, it is evident that the currently available solutions lack the requirements of security, non-invasiveness and unalterability which would be required to be able to give satisfactory results.

In this context, the technical task underpinning the present invention is to propose a method for generating a digital identity of a good which obviates at least some of the drawbacks in the prior art as described above.

In particular, it is the object of the present invention to provide a method for generating a digital identity of a good, in particular a cultural property, which is unalterable over time and non-invasive with respect to the good to be identified.

The stated technical task and the specified objects are substantially achieved by a method for generating a digital identity of a good, comprising the technical characteristics disclosed in one or more of the appended claims.

According to the present invention, a method is thus presented for generating a digital identity of a good.

Such a method is particularly used in the generation of a digital identity for cultural propertys, such as paintings.

The method is carried out by performing a measurement by X-ray fluorescence spectroscopy, XRF, on a plurality of adjacent areas of at least a portion of the good.

With this operation, respective fluorescence spectra are therefore generated which are representative of and identify an elemental composition of the individual areas.

At least one chemical element is then selected.

A monochromatic image (selecting a specific colour to associate with the chemical element or making a greyscale image) of the portion is generated, wherein each area has a chromatic saturation proportional to the concentration of said chemical element within the respective area. The digital identity is generated by uniquely associating the image with the good. Advantageously, the method proposed herein allows to uniquely and securely identify a good, which is particularly useful in combating the counterfeiting of cultural propertys.

Such a result is achieved by identifying the good not on the basis of aesthetic surface characteristics (which can be easily altered) or the application of external elements (which undermine the integrity of the good and are removable) but by connecting the identity of the good to its elemental composition, generating one or more images representative of and identifying a concentration of specific chemical elements in the portions of the good inspected by means of XRF technique.

The dependent claims, incorporated herein by reference, correspond to different embodiments of the invention.

Further characteristics and advantages of the present invention will become clearer from the indicative, and therefore non-limiting, description of a preferred but not exclusive embodiment of a method for generating a digital identity, as illustrated in the attached drawings, in which:
- Figure 1 shows a good with a portion highlighted on which some of the steps of the method according to the present invention are carried out;
- Figure 2 illustrates some of the graphical representations and digital identity-forming data which can be generated by means of the application of the claimed method.

The present invention relates to a method for generating a digital identity of a good.

In particular, the implementation of the method claimed herein finds advantageous application in the sector of cultural propertys, allowing a unique digital identity to be attributed to a cultural property such as a painting.

Thanks to the secure and certain attribution of a digital identity, it is possible in a second analysis to identify without any doubt the correspondence of the good to which that digital identity was assigned.

The digital identity could then possibly also be used to certify the ownership of the analysed good.

The method described herein is carried out starting from a measurement by X-ray fluorescence spectroscopy, XRF, of a plurality of adjacent areas which identify and define a portion of the good as a whole.

In particular, such a measurement technique involves generating an excitation X-ray signal (indicated in the remainder of the present description simply as an X-ray signal) and emitting it in the direction of at least a portion of the good for which a digital identity is to be generated.

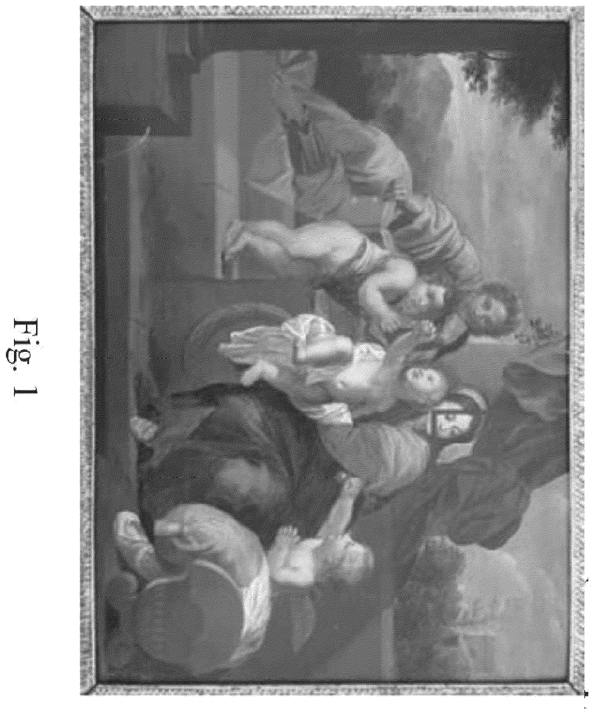

Figure 1 shows in particular a painting in which an example of a portion on which the method can be carried out is highlighted.

Such a portion can be more or less extensive, and in particular, the excitation X-ray signal can irradiate individual areas which together form the portion, and which have a surface extent delimited by a square with sides of between 0.2 and 4 millimetres or any other shape with which a similar surface extent is associated.

Instead, the portion can have an extent which ranges from a few square centimetres to covering the entire good.

That is, the portion on which the XRF measurement is performed can have an extent limited to a clearly circumscribed area of the good (e.g., a square with sides of between 2 and 4 centimetres) or extend over the entire surface of the good.

Similarly, the measurement can be performed sequentially on a plurality of distinct or only partially overlapping portions of the surface of the good, performing the method described herein on several different/distinct areas or until covering the entire surface thereof with more or less overlapping portions.

The use of X-rays for this type of investigation is particularly optimal if the good is a painting, thanks to the non-destructive nature of the investigation that such a technique allows to carry out.

Once the good is suitably and correctly irradiated with the X-ray signal in at least one of its portions, the excitation of the atoms composing it is obtained, resulting in the generation of a fluorescence X-ray signal (also having a wavelength in the X-ray range), and it is then possible to generate a spectroscopic image by acquiring such a fluorescence X-ray signal emitted by the irradiated portion.

The X-ray fluorescence signal is acquired and can thus be used for generating a processable spectroscopic image to identify the chemical elements present within the portion.

In particular, for each area a respective fluorescence spectrum is obtained which is representative of and identifies an elemental composition of the area which generated the corresponding fluorescence X-ray signal.

In fact, the output of an XRF measurement is a fluorescence spectrum, and the detected X-rays, corresponding to the emission energies of the fluorescence X-ray signal, form variably narrow bell-shaped peaks which mathematically correspond to Gaussian curves; the peaks represent the characteristic emission lines of the elements present in the sample, and the spectrum thus provides qualitative and quantitative information on the elemental composition of a point of the sample.

That is, as a function of an analysis of the spectroscopic image, which identifies the interaction between the X-ray signal and the irradiated portion, it is possible to determine the presence and concentration of chemical elements within the portion itself.

It is therefore possible to generate a certain and secure digital identity, uniquely associating the information contained in such a spectrum with the good itself.

In fact, even if it is possible to make other goods having an aesthetic surface appearance which can be confused with that of the good for which the digital identity has been generated, it is instead in fact impossible to be able to also precisely replicate the elemental composition thereof.

The method described and proposed herein thus allows to generate a digital identity which uniquely identifies the good, is not subject to changes over time and does not require the application of further external elements which can reduce the value thereof or generally ruin the structure and/or appearance thereof.

In more detail, this last step of generating the digital identity is carried out by selecting at least one chemical element, which can be, by way of non-limiting example, Calcium, Iron, Lead.

As a function of the spectra generated by the XRF measurement, a monochromatic image of the portion is then generated, wherein each area has a chromatic saturation proportional to a concentration of the selected chemical element within the respective area;
that is; a specific colour is associated with each selected element and the distribution of the element in the portion is represented according to the quantity measured by acquiring the fluorescence X-ray signal, attributing maximum saturation to the point of maximum quantity of the element and a minimum saturation, thus a black colour, in the points where the element in question is absent.

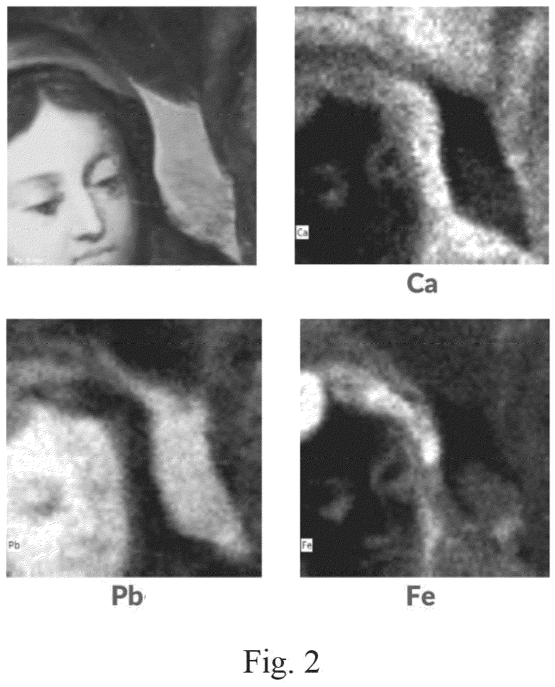

The image can also be generated in greyscale, as can be seen specifically within the example illustrated in Figure 2.

Advantageously, as mentioned above, the generation of the digital identity can also be performed taking into account a plurality of completely distinct or at least partially overlapping portions of the good.

This thereby increases the amount of unique information which makes up the overall identity of the good, further increasing the soundness of the generated digital identity, as the latter is based on a greater number (and therefore even more difficult to replicate) of specific chemical compositions for respective portions of the good.

Similarly, it is possible to select a plurality of chemical elements and generate respective monochromatic images, thus obtaining a distinct image for each selected element.

As illustrated by way of example in Figure 2, it is then possible to map the presence and concentration of specific chemical elements in the good, generating a graphical representation of their distribution.

Specifically, in Figure 2, the same portion of the good, in this case a painting, is illustrated in greyscale as it appears to the human eye and is flanked by graphic representations illustrating the respective distribution maps of the elements Calcium, Iron and Lead within the same portion.

The generation of the digital identity is then performed by uniquely associating the good with at least one monochromatic image generated by carrying out the operations presented so far.

Advantageously, the digital identities generated by carrying out the method described above can be further stored within an appropriate storage unit. Such a storage unit can comprise a local storage managed by the owner or curator of the good and/or a distributed database or regardless a database which can be accessed remotely e.g., by means of an internet connection. For example, the storage unit can comprise a database based on blockchain technology and/or be a database on cloud computing. Thereby, the digital identities of the goods would be easily searchable and accessible, allowing the authenticity of the good to be verified simply by consulting the identity thereof stored in the storage unit, enabling a particularly advantageous application of the method in the cultural heritage sector.

In this context, the present invention further relates to a method for verifying the identity of a good, which allows to certify the authenticity of the good itself and possibly also confirm the ownership thereof, thus representing an effective tool for combating counterfeiting and receiving goods, especially cultural propertys such as paintings.

Such a verification method can be carried out by arranging a good to be verified and/or certified and/or assessed and performing an XRF measurement on a plurality of adjacent areas of at least a portion of the good, generating respective fluorescence spectra representative of and identifying an elemental composition of the respective areas.

The method continues by selecting at least one chemical element, then generating a monochromatic verification image of the portion, wherein each area has a chromatic saturation proportional to the concentration of said chemical element within the corresponding area.

A storage unit is then queried, acquiring a stored digital identity, which has previously been associated with the good to be verified, e.g., by carrying out the method for generating a digital identity described herein.

Comparing point-by-point the verification image with the stored digital identity, the authenticity of the good can be ascertained.

In fact, in the case of identicalness or substantial correspondence between the verification image and the stored digital identity, the authenticity of the good is certified as well as possibly validating all the other information related thereto.

Advantageously, the procedures described achieve the proposed objects, overcoming the drawbacks complained of in the prior art, providing the user with a method for generating a digital identity and for verifying the identity of a good which does not require the installation/application of additional elements on the good itself and which, not limiting itself to an assessment of the mere aesthetic appearance of the good, guarantees the correct and unambiguous identification thereof and prevents the counterfeiting thereof. A further object of the present invention is to provide a device for generating a digital identity which can be specifically used to carry out the operations and overall the methods described above.

Essentially, such a device comprises an X-ray fluorescence spectroscopy, XRF, machine, which substantially comprises a light source and an optical sensor.

The device further comprises a calculator (a computer, a processor or a generic electronic device provided with computing capability).

The light source is configured to generate an X-ray signal which can be emitted in the direction of at least a portion of a good for which the digital identity is to be generated or verified so as to essentially scan it, progressively exciting the atoms of the areas which constitute such a portion overall.

The optical sensor is configured to acquire spectra identifying and representing the elemental composition of the individual areas, measuring a fluorescence X-ray signal emitted by the atoms present in such areas when irradiated by the X-ray signal.

Instead, the calculator is configured to control the activation of the XRF machine, select at least one chemical element and generate a false-colour image of the portion, wherein each area has a chromatic saturation proportional to the concentration of said chemical element within the corresponding area.

The selection of the chemical element of interest can be performed by a user by means of a suitable terminal (a keyboard, a touch screen, ...) or be preset according to absolute predefined criteria, or even be selected autonomously by the control unit according to the characteristics of the good.

For example, the use of the device to generate the digital identity of a painting can result in the automatic selection of at least one of Calcium, Iron and Lead as the chemical reference element.

The calculator is further responsible for generating a digital identity by uniquely associating the at least one image with the good. Advantageously, the device can comprise or be connected (in a wired manner or by means of a wireless connection) with a storage unit within which the generated digital identities can be stored.

## Claims

1. A method for generating a digital identity of a good, comprising the steps of:
- performing a measurement by X-ray fluorescence spectroscopy, XRF, on a plurality of adjacent areas of at least a portion of the good, thereby generating respective fluorescence spectra representative of and identifying an elemental composition of the areas;
- selecting at least one chemical element;
- as a function of said spectra, generating a monochromatic image of the portion, wherein each area has a chromatic saturation proportional to a concentration of said chemical element within the respective area;
- generating a digital identity by uniquely associating said at least one image with the good.

2. The method according to claim 1, wherein each area has a surface extent delimited by a square with sides of between 0.2 and 4 millimetres.

3. The method according to claim 1 or 2, wherein the portion of the good has a surface extent delimited by a square with sides of between 2 and 4 centimetres.

4. The method according to any one of the preceding claims, wherein the at least one portion covers overall an entire surface of the good.

5. The method according to any one of the preceding claims, wherein the step of performing a measurement is carried out by performing a measurement on a plurality of portions of the good.

6. The method according to any one of the preceding claims, wherein the step of selecting at least one chemical element is carried out by selecting an element from: Calcium, Iron, and Lead.

7. The method according to any one of the preceding claims, comprising the steps of:
- selecting a plurality of chemical elements;
- for each chemical element, generating a respective monochromatic image of the portion, wherein each area has a chromatic saturation proportional to the concentration of said chemical element within said area;
- generating a digital identity by uniquely associating said plurality of images with the good.

8. The method according to any one of the preceding claims, comprising a step of storing the digital identity in a storage unit, preferably a distributed database, even more preferably a blockchain and/or a computing cloud.

9. A method for verifying the identity of a good, comprising the steps of:
- performing a measurement by X-ray fluorescence spectroscopy, XRF, on a plurality of adjacent areas of at least a portion of the good, thereby generating respective fluorescence spectra representative of and identifying an elemental composition of the areas;
- selecting at least one chemical element;
- as a function of said spectra, generating a monochromatic verification image of the portion, wherein each area has a chromatic saturation proportional to the concentration of said chemical element within said area;
- querying a storage unit, thereby acquiring a stored digital identity associated with the good to be verified and generated by implementing a method according to any one of claims 1 to 8;
- comparing point-by-point the verification image with the stored digital identity and in the case of identicalness between the verification image and the stored digital identity, certifying the authenticity of the good.

10. A device for generating a digital identity of a good, comprising:
- an X-ray fluorescence spectroscopy, XRF, machine;
- a computer configured to:
- control the activation of the XRF machine in order to perform an XRF measurement on a plurality of adjacent areas of at least one portion of the good, thereby generating respective fluorescence spectra representative of and identifying an elemental composition of the areas;
- selecting at least one chemical element;
- as a function of said spectra, generating a monochromatic image of the portion, wherein each area has a chromatic saturation proportional to the concentration of said chemical element within said area;
- generating a digital identity by uniquely associating said at least one image with the good.
